# EUROPÄISCHE PATENTSCHRIFT

(11) **EP 0 499 020 B1**
(45) Veröffentlichungstag und Bekanntmachung des Hinweises auf die Patenterteilung: **14.09.1994**
(21) Anmeldenummer: 92100168.1
(22) Anmeldetag: 08.01.1992
(51) Int. Cl.: B60J 3/02

(54) **Sonnenblende für Fahrzeuge**
Sun visor for vehicles
Pare-soleil pour véhicules

(30) Priorität: 09.02.1991 DE 4104032
(43) Veröffentlichungstag der Anmeldung: 19.08.1992
(73) Patentinhaber: Gebr. Happich GmbH, D-42097 Wuppertal (DE)
(72) Erfinder: Lecorvaisier, René, F-57470 Homborg-Haut (FR); Hilt, Gerard, F-57470 Henriville (FR); Weiss, Didier, F-57880 Guerting (FR); Agro, Marc, F-57500 Saint Avold (FR)

(56) Entgegenhaltungen:
- EP-A- 0 149 073
- EP-A- 0 231 440
- EP-A- 0 374 582
- DE-A- 3 324 305
- US-A- 4 925 233

## Beschreibung

Die Erfindung bezieht sich auf eine Sonnenblende für Fahrzeuge mit einem Sonnenblendenkörper, der um eine Achse schwenkbar und auf dieser Achse längsverschiebbar angeordnet ist, wobei die Achse drehbeweglich,jedoch gegen ein axiales Verschieben gesichert, von einem Gleitkörper aufgenommen ist, der seinerseits drehfest, jedoch axial verschiebbar,in einem rohrförmigen, im Bereich einer Längskante des Sonnenblendenkörpers eingebetteten Hohlkörper gelagert ist, und wobei der Gleitkörper mit einem inneren, radial gegen die Achse wirkenden Andruckelement ausgerüstet ist und über den Umfang verteilte, die Abstützung des Gleitkörpers im Hohlkörper bewirkende äußere Andruckelemente aufweist. Der Gleitkörper besteht aus einem Kunststoff-Spritzgußteil und weist zwischen einem vorderen und einem hinteren Lagerange einen länglichen, von außen her zugänglichen Hohlraum auf.

Eine Sonnenblende der gattungsgemäßen Art ist in der EP-A- 0 231 440 gezeigt und beschrieben. Obgleich sich die bekannte Sonnenblende in der Praxis an sich recht gut bewährt hat, hat sich gezeigt, daß noch ein Verbesserungsbedarf besteht.

Aufgabe der vorliegenden Erfindung ist es, eine Sonnenblende der eingangs genannten Art derart weiterzubilden und zu vervollkommnen, daß die Längsverschiebbarkeit des Sonnenblendenkörpers mit einer vorgegebenen Schiebekraft sichergestellt ist, und zwar unabhängig davon, welchen Temperaturen oder Temperaturschwankungen, die in einem Fahrzeug auftreten können, die Sonnenblende ausgesetzt wird.

Die Aufgabe ist durch die Merkmale des Anspruchs 1 gelöst. Hierbei wird in den Hohlraum ein länglicher, für die Aufnahme der Achse bestimmter Metallkäfig eingesetzt, der das gegen die Achse wirkende Andruckelement trägt, wobei zwischen dem Boden des Metallkäfigs und dem Andruckelement Federmittel angeordnet sind, um das Andruckelement gegen die Achse und damit die Achse gegen die entsprechend dem Radius der Achse abgerundete Kopfwandung des Metallkäfigs zu pressen.

Durch diese erfindungsgemäßen Maßnahmen wird erreicht, daß die auf die Achse wirkenden Federkräfte nunmehr auf den Metallkäfig übertragen werden und es dadurch zur völligen Entlastung des Gleitkörpers kommt. Unmittelbar auf den Gleitkörper wirkende Federkräfte können dazu führen, daß sich der Gleitkörper, insbesondere bei höheren Temperaturen (70° C oder mehr) verformt, womit die Verschiebbarkeit des Blendenkörpers bis hin zur Blockierung beeinträchtigt werden kann. Diese Gefahr ist zufolge der erfindungsgemäßen Maßnahmen nun nicht mehr vorhanden, denn da nunmehr die Federkräfte ausschließlich vom Metallkäfig (Stahlkäfig) aufgenommen werden, vermag der insoweit entlastete Gleitkörper seine ureigene Aufgabe, nämlich eine leichtgängige Verschiebbarkeit des Sonnenblendenkörpers sicherzustellen, unbeschadet von Umgebungseinflüssen, jetzt in optimaler Weise zu erfüllen.

Der Metallkäfig kann in Anpassung an die baulichen Gegebenheiten der Sonnenblende, ebenso wie der rohrförmige Hohlkörper und der Gleitkörper, einen Querschnitt in Form eines Rechtecks mit einer abgerundeten Schmalseite aufweisen.

Zur Errhöhung der Stabilität des Metallkäfigs kann vorgesehen sein, daß der Boden desselben als separates Plattenteil mit seitlich vorspringenden Materialansätzen, die in Öffnungen in den Seitenwänden des Metallkäfigs eingreifen, gefertigt ist. Diese Maßnahme kommt zudem der Montage des gegen die Achse wirkenden Andruckelements und der Federmittel entgegen.

Gemäß einer Ausgestaltung der Erfindung ist vorgesehen, daß die Seitenwände des Metallkäfigs jeweils einen mittig angeordneten Schlitz aufweisen, der senkrecht zur Längsachse des Metallkäfigs verläuft, zum Boden des Metallkäfigs hin offen ist, vor der Kopfwandung des Metallkäfigs endet und zur Aufnahme von seitlichen Materialansätzen, die an dem Andruckelement ausgebildet sind, dient. Auf diese Weise vermag das Andruckelement innerhalb des Metallkäfigs gegen die Kraft der Federmittel einen Bewegungshub senkrecht zur Achse zu vollführen. Ein solcher Bewegungshub ist erforderlich, wenn die Achse mit zumindest einer, eine Raststellung für die Sonnenblende definierenden Abflachung versehen ist.

Es hat sich als besonders zweckmäßig und vorteilhaft erwiesen, daß die zwischen dem Boden des Metallkäfigs und dem Andruckelement angeordneten Federmittel aus zwei abgeschliffenen und kalibrierten Druckfedern bestehen.

Ferner hat es sich im Hinblick auf eine leichtgängige Verschiebbarkeit des Sonnenblendenkörpers als besonders vorteilhaft erwiesen, daß der Gleitkörper an einer Längsseite zwei ausgeformte Vertiefungen aufweist, von denen jede einem Gleitkörperende benachbart ist und zur abgestützten Aufnahme je eines abgekröpften Endes einer sich über die Außenfläche des Gleitkörpers erstreckenden Gleitfeder, die sich mit einem Bogenbereich gegen die Innenwandung des rohrförmigen Hohlkörpers abstützt, dient. Die Gleitfeder begründet einen weiteren Vorteil insofern, als sie toleranzausgleichend wirkt.

Die erfindungsgemäße Sonnenblende kann weiterhin dadurch ausgestaltet sein, daß der Gleitkörper am bodenseitigen Ende des Hohlraumes beidseitig angeordnete, den Boden durch-dringende Schlitze aufweist, welche von den freien Endbereichen der Metallkäfigwände, die den Boden des Metallkäfigs überragen, durchsetzt sind und daß der Gleitkörper an den Hohlraumseitenwänden innenseitig angeformte Materialansätze aufweist, die, ebenso wie die seitlichen Materialansätze des Andruckelements, in die Schlitze des Metallkäfigs eingreifen. Diese Maßnahmen dienen, ebenso wie die, daß die seitlichen Materialansätze des Andruckelements eine Länge aufweisen, die es ermöglichen, auch in fensterartige Öffnungen in den Seitenwänden des Gleitkörpers einzudringen, der lagefixierten und unbedingt wackelfreien Anordnung des Metallkäfigs im Gleitkörper. Zudem wird durch die besondere Anordnung des Metallkäfigs im Gleitkörper eine Stabilisierung des letzteren bewirkt, so daß der Gleitkörper relativ dünnwandig und materialsparend ausgeführt werden kann.

Ein Ausführungsbeispiel der Erfindung wird im folgenden anhand der Zeichnung näher erläutert. Es zeigen:
- Fig. 1: eine Gesamtansicht der Sonnenblende,
- Fig. 2: den Gleitkörper der Sonnenblende nach Fig. 1 bereichsweise im Schnitt,
- Fig. 3: den Gleitkörper in Draufsicht,
- Fig. 4: einen Schnitt IV - IV nach Fig. 2,
- Fig. 5: eine Ansicht des im Gleitkörper sitzenden Metallkäfigs bereichsweise im Schnitt und
- Fig. 6: eine Seitenansicht nach Fig. 5.

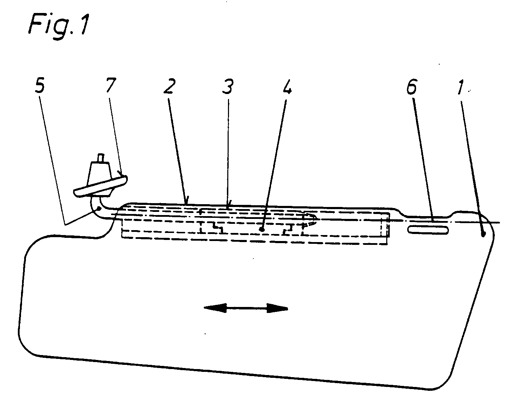

Die Sonnenblende nach Fig. 1 besteht aus einem Sonnenblendenkörper 1, der im Bereich seiner oberen Längskante 2 einen darin eingelagerten rohrförmigen Hohlkörper 3 trägt, in dem ein Gleitkörper 4 axial verschiebbar aufgenommen ist, welcher eine Achse 5 lagert. Die Sonnenblende weist weiterhin einen Lagerstift 6 zum Einrasten in ein nicht dargestelltes Gegenlager auf. Die Achse 5 besitzt eine etwa L-förmige Ausbildung, deren langer Schenkel von dem Gleitkörper 4 und deren kurzer Schenkel von einem Schwenklagerböckchen 7 aufgenommen ist. Der Sonnenblendenkörper 1 ist üblicherweise auf dem langen Schenkel der Achse 5 in der aus Fig. 1 ersichtlichen Lage angeordnet. Damit sich Fahrer und Beifahrer eines Fahrzeuges vor einfallenden Sonnenstrahlen oder anderen Lichtquellen schützen können, ist der Sonnenblendenkörper 1 oberhalb der Windschutzscheibe an der Fahrzeugkarosserie befestigt und er kann vor die Windschutzscheibe geklappt oder zu einer Seitenscheibe geschwenkt werden. Darüber hinaus ist eine, durch den Doppelpfeil angedeutete verschiebbare Anordnung des Sonnenblendenkörpers 1 auf dem langen Schenkel der Achse vorgesehen, die besonders dann von Vorteil ist, wenn sich der Sonnenblendenkörper in einer vor einer vorderen Seitenscheibe eines Fahrzeuges geschwenkten Lage befindet.

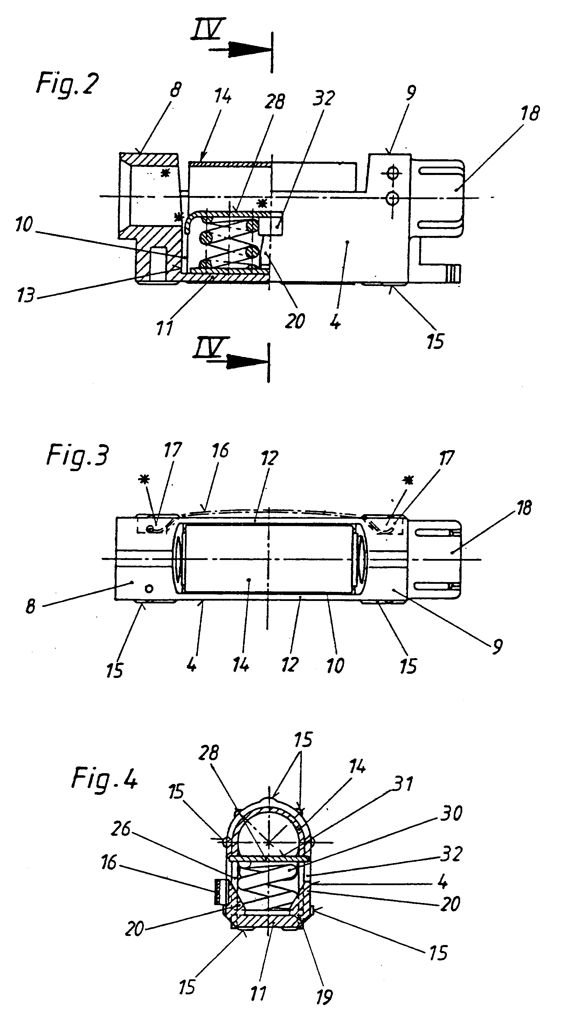

Der in den Fig. 2 bis 4 im gegenüber Fig. 1 vergrößerten Maßstab dargestellte Gleitkörper 4 besteht aus einem Kunststoff-Spritzgußteil und weist im Querschnitt (vgl. Fig. 4) die Form eines Rechtecks mit einer abgerundeten Schmalseite auf. Dieser Querschnitt ist dem des rohrförmigen Hohlkörpers 3 angepaßt. Der Gleitkörper 4 besitzt ein vorderes Lagerauge 8 und ein hinteres Lagerauge 9 für die Achse 5. Zwischen den Lageraugen 8, 9 ist ein länglicher, von außen her zugänglicher Hohlraum 10 ausgespart, der von einem Boden 11, Längsseitenwänden 12 und Schmalseitenwänden 13 umgeben ist. Der Hohlraum 10 dient zur Aufnahme eines Metallkäfigs 14, der noch beschrieben wird.

Der Gleitkörper 4 ist mit über den Umfang verteilten Andruckelementen 15 in Form von Vorsprüngen materialeinheitlich ausgebildet. Die Andruckelemente 15 stützen sich an der Innenwandung des rohrförmigen Hohlkörpers 3 ab, so daß die Reibungsfläche zwischen dem rohrförmigen Hohlkörper 3 und dem Gleitkörper 4 auf die Andruckelemente 15 beschränkt ist. Eine zusätzliche Gleitfeder 16 erhöht zwar die wirksame Gleitfläche, stellt demgegenüber aber einen Ausgleich etwaiger Toleranzen sicher. Der Gleitkörper 4 weist an einer Längsseite zwei ausgeformte Vertiefungen 7 auf, von denen jede einem Gleitkörperende benachbart ist und zur abgestützten Aufnahme je eines abgekröpften Endes der sich über die Außenfläche des Gleitkörpers 4 erstreckenden Gleitfeder 16, die sich mit einem Bogenbereich gegen die Innenwandung des rohrförmigen Hohlkörpers 3 abzustützen vermag, dient.

An das hintere Lagerauge 9 des Gleitkörpers 4 schließt sich eine ringförmige Klipsraste 18 an, die dazu dient, die Achse 5 gegen ein axiales Verschieben gesichert am Gleitkörper 4 festzulegen. Im Boden 11 des Gleitkörpers 4 sind Schlitze 19 ausgespart, und zwar im Übergangsbereich vom Boden 11 zu den Längsseitenwänden 12. Dabei sind an jeder Seite zwei Schlitze 19 nebeneinander angeordnet und zwischen den Schlitzen 19 befindet sich jeweils ein an jeder Hohlraumseitenwand 12 innenseitig angeformter Materialansatz 20.

Der Metallkäfig 14 weist einen Querschnitt auf, der dem des rohrförmigen Hohlkörpers 3 und dem des Gleitkörpers 4 annähernd angepaßt ist. Der Metallkäfig 14 ist aus Stahlblech gebildet und weist zwei Seitenwände 21, eine dem Radius der Achse 5 entsprechend gebogene Kopfwand 22 und einen Boden 23 auf. Der Boden 23 ist als separates Teil ausgebildet und mit seitlich vorspringenden Materialansätzen 24 versehen, die in Öffnungen 25 in den Seitenwänden 21 des Metallkäfigs 14 eingreifen und gehalten sind. Die Seitenwände 21 des Metallkäfigs 14 weisen jeweils einen mittig angeordneten Schlitz 26 auf und jeder Schlitz 26 verläuft senkrecht zur Längsachse des Metallkäfigs, ist zum Boden hin offen und endet vor der Kopfwandung 22 des Metallkäfigs. In die Schlitze 26 greifen seitliche Materialansätze 27, die sich an einem plattenförmigen Andruckelement 28 aus Stahlblech befinden, ein. Innerhalb des Metallkäfigs 14 ist das vorerwähnte Andruckelement 28 angeordnet, welches sich parallel zum Boden 11 und der Kopf-wandung 22 des Metallkäfigs und damit auch parallel zur Achse 5 erstreckt. Das Andruckelement 28, das abgerundete Enden 29 aufweist, ist durch zwei Druckfedern 30 abgestützt, die sich ihrerseits auf dem Boden 23 des Metallkäfigs 14 abstützen. Das Andruckelement 28 wirkt unmittelbar gegen den langen Schenkel der Achse 5 und bewirkt, daß der Sonnenblendenkörper 1 in den unterschiedlichen Klappstellungen oder auch in zumindest einer Raststellung, sofern die Achse 5 mit einer Abflachung 31 versehen ist (vgl. Fig. 4), gehalten wird. Die Achse 5 durchgreift mit ihrem freien Endbereich die Lageraugen 8 und 9 des Gleitkörpers 4 sowie den Metallkäfig 14 und ist in den Lageraugen 8 und 9 sowie in dem Metallkäfig 14 auch drehbeweglich gelagert.

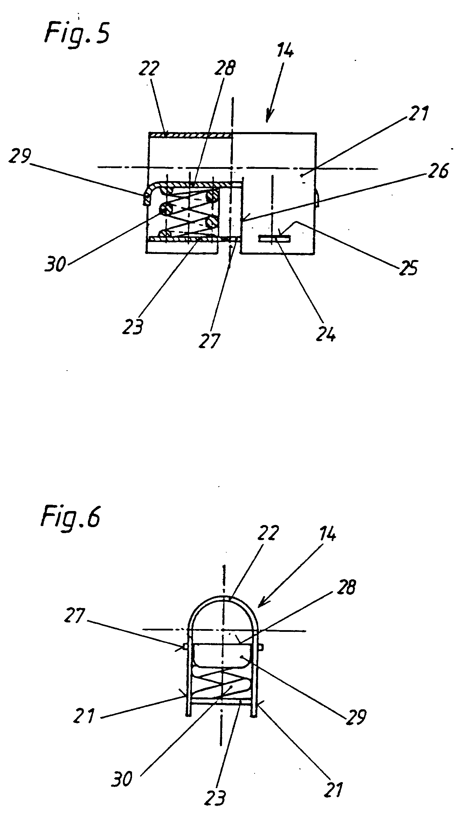

Der in den Fig. 5 und 6 gezeigte Zusammenbau des Metallkäfigs 14 wird von oben her in den Hohlraum 10 des Gleitkörpers 4 eingesetzt. Dabei erfolgt eine zuverlässige, wackelfreie Verbindung zwischen dem Gleitkörper 4 und dem Metallkäfig 14, indem die Materialansätze 20 in die Schlitze 26, die über den Boden 23 gezogenen Enden der Seitenwände 21 in die seitlichen Schlitze 19 und die verlängerten Materialansätze 27 in fensterartige Öffnungen 32 des Gleitkörpers 4 eingreifen.

## Patentansprüche

1. Sonnenblende für Fahrzeuge mit einem Sonnenblendenkörper (1), der um eine Achse (5) schwenkbar und auf dieser Achse (5) längsverschiebbar angeordnet ist, wobei die Achse (5) drehbeweglich, jedoch gegen ein axiales Verschieben gesichert, von einem Gleitkörper (4) aufgenommen ist, der seinerseits drehfest, jedoch axial verschiebbar, in einem rohrförmigen, im Bereich einer Längskante (2) des Sonnenblendenkörpers (1) eingebetteten Hohlkörper (3) gelagert ist, und wobei der Gleitkörper (4) mit einem inneren, radial gegen die Achse (5) wirkenden Andruckelement (28) ausgerüstet ist und über den Umfang verteilte, die Abstützung des Gleitkörpers (4)
im Hohlkörper (3) bewirkende äußere Andruckelemente (15) aufweist, wobei der aus einem Kunststoff-Spritzgußteil bestehende Gleitkörper (4) zwischen einem vorderen und einem hinteren Lagerauge (8,9) für die Achse (5) einen länglichen, von außen her zugänglichen Hohlraum (10) aufweist, dadurch gekennzeichnet, daß in dem Hohlraum (10) ein länglicher, für die Aufnahme der Achse bestimmter Metallkäfig (14) eingesetzt ist, der das gegen die Achse (5) wirkende Andruckelement (28) trägt, wobei zwischen dem Boden (23) des Metallkäfigs (14) und dem Andruckelement (28) Federmittel (30) angeordnet sind, um das Andruckelement (28) gegen die Achse (5) und damit die Achse (5) gegen die entsprechend dem Radius der Achse (5) abgerundete Kopfwandung (22) des Metallkäfigs (14) zu pressen.

2. Sonnenblende nach Anspruch 1, dadurch gekennzeichnet, daß der Metallkäfig (14), ebenso wie der rohrförmige Hohlkörper (3) und der Gleitkörper (4) einen Querschnitt in Form eines Rechtecks mit einer abgerundeten Schmalseite aufweist.

3. Sonnenblende nach Anspruch 1 oder 2, dadurch gekennzeichnet, daß der Boden (23) des Metallkäfigs (14) als separates Plattenteil mit seitlich vorspringenden Materialansätzen (24), die in Öffnungen (25) in den Seitenwänden (21) des Metallkäfigs (14) eingreifen, gefertigt ist.

4. Sonnenblende nach wenigstens einem der Ansprüche 1 bis 3, dadurch gekennzeichnet, daß die Seitenwände (21) des Metallkäfigs (14) jeweils einen mittig angeordneten Schlitz (26) aufweisen, der senkrecht zur Längsachse des Metallkäfigs (14) verläuft, zum Boden (23) des Metallkäfigs (14) hin offen ist, vor der Kopfwandung (22) des Metallkäfigs (14) endet und zur Aufnahme von seitlichen Materialansätzen (27), die an dem Andruckelement (28) ausgebildet sind, dienen.

5. Sonnenblende nach wenigstens einem der Ansprüche 1 bis 4, dadurch gekennzeichnet, daß die zwischen dem Boden (23) des Metallkäfigs (14) und dem Andruckelement (28) angeordneten Federmittel aus zwei abgeschliffenen und kalibrierten Druckfedern (30) bestehen.

6. Sonnenblende nach wenigstens einem der Ansprüche 1 bis 5, dadurch gekennzeichnet, daß der Gleitkörper (4) an einer Längsseite zwei ausgeformte Vertiefungen (17) aufweist, von denen jede einem Gleitkörperende benachbart ist und zur abgestützten Aufnahme je eines abgekröpften Endes einer sich über die Außenfläche des Gleitkörpers (4) erstreckenden Gleitfeder (16), die sich mit einem Bogenbereich gegen die Innenwandung des rohrförmigen Hohlkörpers (3) abstützt, dient.

7. Sonnenblende nach wenigstens einem der Ansprüche 1 bis 6, dadurch gekennzeichnet, daß der Gleitkörper (4) am bodenseitigen Ende des Hohlraumes (10) beidseitig angeordnete, den Boden (11) durchdringende Schlitze (19) aufweist, welche von den freien Endbereichen der Metallkäfigwände (21), die den Boden (23) des Metallkäfigs (14) überragen, durchsetzt sind und daß der Gleitkörper (4) an den Hohlraumseitenwänden (12) innenseitig angeformte Materialansätze (20) aufweist, die, ebenso wie die seitlichen Materialansätze (27) des Andruckelements (28), in die Schlitze (26) des Metallkäfigs (14) eingreifen.

8. Sonnenblende nach wenigstens einem der Ansprüche 1 bis 7, dadurch gekennzeichnet, daß die seitlichen Materialansätze (27) des Andruckelements (28) eine Länge aufweisen, die es ermöglichen, auch in fensterartige Öffnungen (32) in den Seitenwänden (12) des Gleitkörpers (4) einzudringen.

## Claims

1. Sun visor for vehicles, having a sun visor member (1) which is pivotable about an axle (5) and is disposed longitudinally displaceably on this axle (5), the axle (5) being received in a rotationally movable arrangement, yet secured against axial displacement, by a sliding member (4), which, for its part, is mounted rotationally securely, yet axially displaceably, in a tubular hollow member (3) embedded in the region of a longitudinal edge (2) of the sun visor member (1), and the sliding member (4) being equipped with an inner pressing element (28), acting radially against the axle (5), and exhibiting outer pressing elements (15) which are distributed over the periphery and realize the support of the sliding member (4) in the hollow member (3), wherein the sliding member (4), consisting of a plastics injection moulded part, exhibits between a front and a rear bearing eyelet (8, 9) for the axle (5) an elongated cavity (10) which is accessible from the outside, characterized in that in the cavity (10) there is inserted an elongated metal cage (14) which is intended for the reception of the axle and which supports the pressing element (28) acting against the axle (5), spring means (30) being disposed between the base (23) of the metal cage (14) and the pressing element (28) in order to press the pressing element (28) against the axle (5) and hence the axle (5) against the end wall (22) of the metal cage (14), which end wall is rounded according to the radius of the axle (5).

2. Sun visor according to Claim 1, characterized in that the metal cage (14), just like the tubular hollow member (3) and the sliding member (4), exhibits a cross-section in the shape of a rectangle having a rounded narrow side.

3. Sun visor according to Claim 1 or 2, characterized in that the base (23) of the metal cage (14) is produced as a separate plate part having laterally projecting material protrusions (24), which engage in openings (25) in the side walls (21) of the metal cage (14).

4. Sun visor according to at least one of Claims 1 to 3, characterized in that the side walls (21) of the metal cage (14) respectively exhibit a centrally disposed slot (26), which runs perpendicular to the longitudinal axis of the metal cage (14), is open in the direction of the base (23) of the metal cage (14), ends in front of the end wall (22) of the metal cage (14) and serve [sic] to receive lateral material protrusions (27) configured on the pressing element (28).

5. Sun visor according to at least one of Claims 1 to 4, characterized in that the spring means disposed between the base (23) of the metal cage (14) and the pressing element (28) comprise two smoothed and calibrated compression springs (30).

6. Sun visor according to at least one of Claims 1 to 5, characterized in that the sliding member (4) exhibits on a longitudinal side two formed-out recesses (17), each of which is adjacent to a sliding member end and serves to receive in a supported fashion a respective cranked end of a slide spring (16), which extends over the outer face of the sliding member (4) and is supported by an arched region against the inner wall of the tubular hollow member (3).

7. Sun visor according to at least one of Claims 1 to 6, characterized in that the sliding member (4) exhibits slots (19) which are disposed at the base-side end of the cavity (10) on both sides and penetrate the base (11) and which are passed through by the free end regions of the metal cage walls (21), which jut over the base (23) of the metal cage (14), and in that the sliding member (4) exhibits material protrusions (20), which are formed onto the cavity side walls (12) on the inside and which, just like the lateral material protrusions (27) of the pressing element (28), engage in the slots (26) in the metal cage (14).

8. Sun visor according to at least one of Claims 1 to 7, characterized in that the lateral material protusions (27) of the pressing element (28) have a length which make [sic] it possible to penetrate also into window-like openings (32) in the side walls (12) of the sliding member (4).

## Revendications

1. Pare-soleil pour véhicules, comprenant un corps (1) qui est monté de façon pivotante autour d'un axe (5) et de façon à pouvoir se déplacer longitudinalement sur cet axe (5), l'axe (5) étant reçu de façon mobile en rotation mais sans pouvoir se déplacer axialement dans un corps coulissant (4) qui est de son côté monté de façon fixe en rotation mais mobile en direction axiale dans un corps creux (3) de forme tubulaire noyé dans la zone d'un bord longitudinal (2) du corps de pare-soleil (1), et le corps coulissant (4) étant équipé d'un élément de pression (28) interne agissant radialement contre l'axe (5) et comprenant des éléments de pression (15) extérieurs répartis sur la périphérie et assurant l'appui du corps coulissant (4) dans le corps creux (4), le corps coulissant (4) constitué en un élément en matière synthétique moulé par injection et comprenant entre un oeillet de support avant et un oeillet de support arrière (8, 9) destinés à l'axe (5) un espace creux (10) de forme allongée et accessible de l'extérieur, caractérisé en ce qu'une cage métallique (14) de forme allongée et destinée à la réception de l'axe est disposée dans l'espace creux (10) et supporte un élément de pression (28) agissant contre l'axe (5), des moyens à ressort (30) étant disposés entre le fond (23) de la cage métallique (14) et l'élément de pression (28) de manière à presser l'élément de pression (28) contre l'axe (5) et de ce fait l'axe (5) contre la paroi de tête (22) de la cage métallique (14) qui est arrondie conformément au rayon de l'axe (5).

2. Pare-soleil selon la revendication 1, caractérisé en ce que la cage métallique (14) de même que le corps creux de forme tubulaire (3) et le corps coulissant (4) présentent en section la forme d'un rectangle dont l'un des côtés étroits est arrondi.

3. Pare-soleil selon la revendication 1 ou 2, caractérisé en ce que le fond (23) de la cage métallique (14) est réalisé sous la forme d'un élément de plaque séparé comportant des nervures (24) faisant saillie latéralement et qui pénètrent dans des ouvertures (25) des parois latérales (21) de la cage métallique (14).

4. Pare-soleil selon l'une au moins des revendications 1 à 3, caractérisé en ce que les parois latérales (21) de la cage métallique (14) comportent chacune une fente (26) disposée en leur centre, qui est perpendiculaire à l'axe longitudinal de la cage métallique (14), est ouverte en direction du fond (23) de la cage métallique (14), se termine à l'avant de la paroi de tête (22) de la cage métallique (14) et sert à la réception de prolongements latéraux (27) qui sont formés sur l'élément de pression (28).

5. Pare-soleil selon l'une au moins des revendication 1 à 4, caractérisé en ce que l'élément à ressorts disposé entre le fond (23) de la cage métallique (14) et l'élément de pression (28) est constitué par deux ressorts de pression (30) rectifiés et calibrés.

6. Pare-soleil selon l'une au moins des revendications 1 à 5, caractérisé en ce que le corps coulissant (4) comprend sur un côté longitudinal deux cavités (17) voisines de chacune de ses extrémités et servant à la réception avec appui de chaque extrémité coudée d'un ressort de glissement (16) s'étendant sur la surface externe du corps coulissant (14) et qui s'appuie par une zone courbe contre la paroi interne du corps creux de forme tubulaire (3).

7. Pare-soleil selon l'une au moins des revendications 1 à 6, caractérisé en ce que le corps coulissant (4) comprend des fentes (19) traversant le fond (11) et disposées de chaque côté de l'extrémité située du côté du fond de l'espace creux (10), fentes qui sont traversées par les zones d'extrémité libres des parois (21) de la cage métallique qui se prolongent au-delà du fond (23) de la cage métallique (14), et le corps coulissant (4) présente des nervures (20) formées sur le côté interne des parois latérales (12) de l'espace creux, nervures qui pénètrent dans les fentes (26) de la cage métallique (14) comme les prolongements latéraux (27) de l'élément de pression (28).

8. Pare-soleil selon l'une au moins des revendications 1 à 7, caractérisé en ce que les prolongements latéraux (27) de l'élément de pression (28) présente une longueur telle qu'elle permet de pénétrer également dans des ouvertures (32) en forme de fenêtres ménagées dans les parois latérales (12) du corps coulissant (4).
